# EUROPÄISCHE PATENTSCHRIFT

(11) **EP 0 416 346 B1**
(45) Veröffentlichungstag und Bekanntmachung des Hinweises auf die Patenterteilung: **14.12.1994**
(21) Anmeldenummer: 90115720.6
(22) Anmeldetag: 16.08.1990
(51) Int. Cl.: G02B 23/06, G02B 7/12, G02B 7/06

(54) **Binokulares Fernrohr**
Binocular telescope
Télescope binoculaire

(30) Priorität: 07.09.1989 DE 3929825
(43) Veröffentlichungstag der Anmeldung: 13.03.1991
(73) Patentinhaber: D. Swarovski & Co., A-6112 Wattens/Tirol (AT)
(72) Erfinder: Riedl, Bernhard, A-6060 Hall in Tirol (AT)
(74) Vertreter: Kador & Partner

(56) Entgegenhaltungen:
- EP-A- 0 152 056
- EP-A- 0 207 332
- DE-A- 2 424 792
- DE-B- 2 948 421

## Beschreibung

Die Erfindung betrifft ein binokulares Fernrohr mit Doppelgelenkbrücke und zentralem Mitteltrieb zur Fokussierung und Dioptrieneinstellung.

Ein binokulares Fernrohr mit Doppelbrücke und zentralem Mitteltrieb zur Fokussierung ist bereits aus der DE-A 24 24 792 bekannt. Mit dem Mitteltrieb kann jedoch keine Dioptrieneinstellung vorgenommen werden.

Aus der DE-B 29 48 423 ist ein binokulares Fernrohr mit Doppelgelenkbrücke bekannt, wobei die Fokussierung jedoch nicht über einen Mitteltrieb erfolgt, sondern die Triebknöpfe für die Fokussierung und die Dioptrieneinstellung auf den Schwenkachsen angeordnet sind.

Aus dem deutschen Gebrauchsmuster DE-U-84 04 136 ist ein Mitteltrieb zur Innenfokussierung für Ferngläser bekannt. Bei dieser Konstruktion sind der gesamte Hub und die Brücke im Treibrad angeordnet, das daher unerwünscht groß dimensioniert werden muß. Ferner sind bei der bekannten Konstruktion die Triebe für Fokussierung und Dioptrienausgleich an entgegengesetzten Seiten angeordnet, was Montage, Justierung und eventuelle Reparatur erschwert.

Nach der DE-C 35 24 152 ist zur Dioptrieneinstellung ein Dioptrieverstellrad vorgesehen, welches über ein Antriebszahnrad, ein Zwischenzahnrad und ein Abtriebszahnrad mit der Mitnehmervelle in Eingriff steht. Das Zwischenzahnrad ist auf der Dioptrieverstellseite angeordnet und durch die Brücke oder seitlich daran vorbeigeführt. Es weist eine solche Höhe auf, daß das Abtriebszahnrad über den gesamten Hubbereich der Fokussierung mit dem Zwischenzahnrad in Eingriff steht.

Aufgabe der Erfindung ist die Schaffung eines binokularen Fernrohrs mit Doppelgelenkbrücke wobei sowohl die Fokussierung als auch die Dioptrieneinstellung über einen zentralen Mitteltrieb erfolgen.

Der Erfindung liegt die Erkenntnis zugrunde, daß diese Aufgabe durch einen Mitteltrieb gelöst werden kann, der eine Brücke aus zwei Teilen umfaßt, die durch ein drehend verstellbares Kupplungsteil verbunden sind.

Gegenstand der Erfindung ist ein binokulares Fernrohr mit Doppelgelenkbrücke und zentralem Mitteltrieb zur Fokussierung und Dioptrieneinstellung bei dem ein Fokussierrad über eine Gewindespindel mit einer verschiebbaren Brücke in Eingriff steht und die Objektivfokussierlinsen zwecks Fokussierung über Mitnehmerwellen mit der verschiebbaren Brücke verbunden sind, und ein Dipotrieverstellrad mit einer der Mitnehmerwellen in Eingriff steht, um die Lage einer Objektivfokussierlinse zur Dioptrieneinstellung zu ändern, wobei die Brücke aus einem ersten Brückenteil, der mit der Gewindespindel fest verbunden ist, und einem zweiten Brückenteil besteht, der über eine von dem Dioptrieverstellrad angetriebene Kupplungswelle mit dem ersten Brückenteil über ein Gewinde verbunden ist, und wobei der zweite Brückenteil von der Kupplungswelle in axialer Richtung zwecks Relativverschiebung des ersten Brückenteils zum zweiten Brückenteil mitgenommen wird.

Gemäß einer bevorzugten Ausführung werden zur Vermeidung zu großen Spiels die Brückenteile in Führungsstangen geführt.

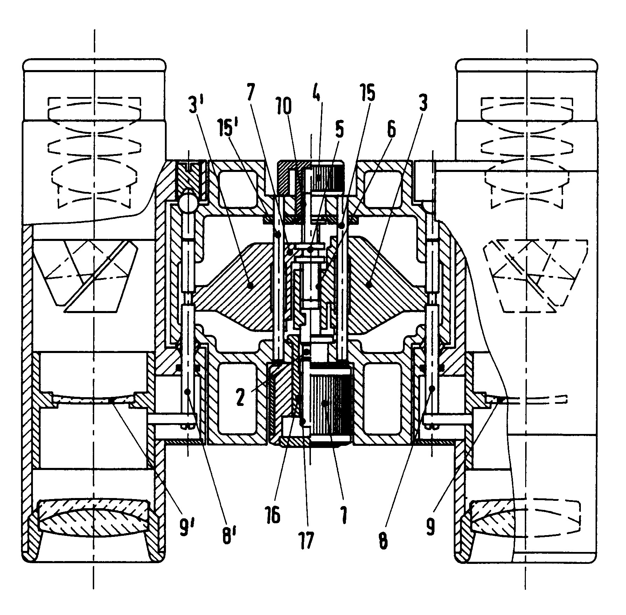

Weitere Einzelheiten und Ausgestaltungen der Erfindung sind an einem in der Zeichnung schematisch dargestellten Ausführungsbeispiel näher erläutert.

Die Figur zeigt den Mitteltrieb eines binokularen Fernrohrs zur Fokussierung und Dioptrieneinstellung in Draufsicht.

Zur Fokussierung dient das Fokussierrad 1. Dieses weist ein Innengewinde 16 auf, das mit dem Außengewinde 17 der Gewindelspindel 2 in Wirkverbindung steht. Bei Drehung des Fokussierrades 1 erfolgt eine axiale Verschiebung der Gewindespindel 2. Die Gewindespindel 2 ist mit dem ersten Brückenteil 3 fest verbunden. Der zweite Brückenteil 3′ ist seinerseits über die Kupplungswelle 5 mit dem ersten Brückenteil in Verbindung. Bei axialer Verschiebung der Gewindelspindel 2 werden somit der erste Brückenteil 3 und der zweite Brückenteil 3′ um gleiche Beträge axial verschoben. Die Brückenteile 3, 3′ sind ihrerseits mit Mitnehmerwellen 8, 8′ verbunden, die die axiale Bewegung zwecks Fokussierung auf die Objektivfokussierlinsen 9, 9′ übertragen.

Zur Vermeidung von Spiel ist es vorteilhaft, die Brückenteile, insbesondere den zweiten Brückenteil 3′ in Führungsstangen 15, 15′ zu führen.

Die Dioptrieneinstellung erfolgt über das Dioptrieverstellrad 4, das mit einer Kupplungswelle 5 durch eine Keilverzahnung 10 axial verschiebbar verbunden ist. Die Kupplungswelle 5 ist über ein Gewinde 6 mit dem ersten Brückenteil 3 in Verbindung, wobei die Kupplungswelle 5 ein Außengewinde und der erste Brückenteil 3 ein Innengewinde aufweisen. Der zweite Brückenteil 3′ ist mit der Kupplungswelle 5 über einen Mitnehmer 7 zwecks axialer Verschiebung verbunden, jedoch dreht sich die Kupplungswelle 5 frei im zweiten Brückenteil 3′. Bei Drehung des Dioptrieverstellrades erfolgt eine axiale Verschiebung der Kupplungswelle 5 und damit auch über den Mitnehmer 7 des zweiten Brückenteils 3′ relativ zum ersten Brückenteil 3. Diese relative Axialverschiebung wird über die Mitnehmerwelle 8′ auf die Objektivfokussierlinse 9′ zur Dioptrieneinstellung übertragen.

## Patentansprüche

1. Binokulares Fernrohr mit Doppelgelenkbrücke und zentralem Mitteltrieb zur Fokussierung und Dioptrieneinstellung bei dem ein Fokussierrad (1) über eine Gewindespindel (2) mit einer verschiebbaren Brücke (3, 3′) in Eingriff steht und die Objektivfokussierlinsen (9,9′) zwecks Fokussierung über Mitnehmervellen (8, 8′) mit der verschiebbaren Brücke (3, 3′) verbunden sind, und ein Dioptrieverstellrad (4) mit einer der Mitnehmervellen (8′) in Eingriff steht, um die Lage einer Objektivfokussierlinse (9′) zur Dioptrieneinstellung zu ändern,
wobei die Brücke aus einem ersten Brückenteil (3), der mit der Gewindespindel (2) fest verbunden ist und einem zweiten Brückenteil (3′) besteht, der über eine von dem Dioptrieverstellrad (4) angetriebene Kupplungswelle (5) über ein Gewinde (6) mit dem ersten Brückenteil (3) verbunden ist, und wobei der zweite Brückenteil (3′) mittels der Kupplungswelle (5) in axialer Richtung relativ zum ersten Brückenteil (3) verstellt werden kann.

2. Binokulares Fernrohr nach Anspruch 1,
**dadurch gekennzeichnet**, daß die Brückenteile (3, 3′) in Führungsstangen (15, 15′) geführt werden.

## Claims

1. A binocular telescope having a double-jointed bridge and a central joint focusing means for focusing and diopter adjustment wherein a focusing wheel (1) engages a displaceable bridge (3, 3′) via a threaded spindle (2), and the objective focusing lenses (9, 9′) are connected with the displaceable bridge (3, 3′) via clutch shafts (8, 8′) for the purpose of focusing, and a diopter adjustment wheel (4) engages one of the clutch shafts (8′) to change the position of an objective focusing lens (9, 9′) for diopter adjustment, wherein the bridge comprises a first member (3) firmly connected with the threaded spindle (2), and a second member (3′) connected with the first member (3) by a thread (6) via a clutch shaft (5) driven by the diopter adjustment wheel (4), the second bridge member (3′) being taken along by the clutch shaft (5) in the axial direction relative to the first bridge member (3).

2. The binocular telescope of claim 1, characterized in that the bridge members (3, 3′) are guided in motion rods (15, 15′).

## Revendications

1. Jumelle binoculaire avec un pont à articulation double et avec un dispositif central de mise au point et de réglage dioptique où une molette de mise au point (1) est en prise avec un pont coulissant (3, 3′) à l'aide d'une broche filetée (2) et les verres de mise au point (9, 9′) à régler sont reliés au pont coulissant (3, 3′) à l'aide d'arbres menés (8, 8′) et une molette de réglage dioptique (4) est en prise avec un des arbres menés (8′) pour modifier la position d'un verre de mise au point (9′) pour le réglage dioptique, jumelle dans laquelle le pont est constitué d'une première partie (3) et d'une seconde partie (3′) dont la première de celles-ci est reliée rigidement à la broche filetée (2) et dont la seconde de celles-ci est reliée à la première partie (3) par l'intermédiaire d'un arbre d'accouplement (5) et une vis (6) commandés par la molette de réglage dioptique (4) de manière que l'on puisse déplacer axialement la seconde partie (3) relativement à la première (3) à l'aide de l'arbre d'accouplement (5).

2. Jumelle selon la revendication 1, caractérisée en ce que les parties du pont (3, 3′) sont dirigées par des tiges de guidage (15, 15′).
